# EUROPÄISCHE PATENTANMELDUNG

(11) **EP 3 293 869 A1**
(43) Veröffentlichungstag der Anmeldung: **14.03.2018**
(21) Anmeldenummer: 16188288.1
(22) Anmeldetag: 12.09.2016
(51) Int. Cl.: H02K 15/06

(54) **VERFAHREN ZUR HERSTELLUNG EINER STATORWICKLUNG**

(71) Anmelder: Siemens Aktiengesellschaft, 80333 München (DE)
(72) Erfinder: Evers, Christoph, 46236 Bottrop (DE); Grau Sorarrain, Esteban, 40217 Düsseldorf (DE); Joswig, Ana, 44227 Dortmund (DE); Lehmann, Christoph, 47506 Neukirchen-Vluyn (DE); Steins, Hendrik, 45134 Essen (DE); Werkmeister, Stephan, 46286 Dorsten (DE); Wysgol, Markus, 44789 Bochum (DE)

(57) **Zusammenfassung**

Die Erfindung betrifft ein Verfahren zur Herstellung einer Statorwicklung für eine elektrodynamische Maschine, insbesondere elektrischer Generator, wobei mehrere Leitungsstäbe (1a, 1b) vorgefertigt werden, die mittels einer Vermessungsvorrichtung (2) vermessen werden, wobei in einem Blechpaket (3) die Nuten (4) ebenfalls dreidimensional vermessen werden und ein Berechnungssystem eine Zuordnung zwischen einem Leitungsstab (1a, 1b) und einer Nut (4) ermittelt, die zu einem idealen Blechpaket (3) führt.

## Beschreibung

Die Erfindung betrifft ein Verfahren zur Herstellung einer Statorwicklung für eine elektrodynamische Maschine, wobei die Statorwicklung aus Leitungsstäben ausgebildet wird, wobei die elektrodynamische Maschine ein Blechpaket umfasst, wobei Nuten im Blechpaket ausgebildet werden, die zum Aufnehmen von Leitungsstäben ausgebildet sind.

Desweiteren betrifft die Erfindung ein Automatisierungssystem zur Herstellung einer Statorwicklung einer elektrodynamischen Maschine, wobei die Statorwicklung Leitungsstäbe umfasst, wobei die elektrodynamische Maschine ein Blechpaket umfasst, wobei Nuten im Blechpaket angeordnet sind, die zum Aufnehmen von Leitungsstäben ausgebildet sind.

Elektrodynamische Maschinen, wie beispielsweise ein elektrischer Generator umfassen im Wesentlichen zwei Bauteile, einen Stator mit einer Statorwicklung sowie einen drehbar gelagerten Rotor mit einer Rotorwicklung. Durch die Rotorwicklung fliest ein elektrischer Strom, der zu einem veränderlichen magnetischen Feld führt, der in der Statorwicklung eine elektrische Spannung induziert. Eine sehr wichtige Komponente hierbei ist die Statorwicklung. Die Herstellung der Statorwicklung ist komplex und umfasst mehrere Verfahrensschritte. Die Statorwicklung umfasst mehrere Leitungsstäbe, die in einem Verfahrensschritt zunächst einzeln hergestellt werden, wobei die Leitungsstäbe eine Idealgeometrie aufweisen sollten, um in entsprechende Nuten in einem Blechpaket angeordnet zu werden. Die einzelnen Leitungsstäbe werden einzeln gefertigt und nacheinander in die Nuten eingebracht. Aufgrund ungünstiger Aufsummierung von Fertigungstoleranzen kann es vorkommen, dass Spalte entstehen, die nicht erwünscht sind. Bisher wurde dies durch eine manuelle oder individuelle Nacharbeit behoben. Dies erfolgt in der Regel durch ein Nachmessen der Spalte und einer individuellen Anfertigung von Glasbauteilen, Quellmatten usw. zur Schließung von Spalten. Sofern die Fertigungstoleranz derart ist, dass der Leitungsstab sogar falsch liegt, wird dieser mit erheblichem Kraftaufwand in die Endposition gebogen, was die Gefahr einer Beschädigung des Leitungsstabes mit sich führt.

Wünschenswert wäre es daher, die Herstellung der Statorwicklung einfacher zu gestalten.

Gelöst wird diese Aufgabe durch ein Verfahren zur Herstellung einer Statorwicklung für eine elektrodynamische Maschine, wobei die Statorwicklung aus Leitungsstäben ausgebildet wird, wobei die elektrodynamische Maschine ein Blechpaket umfasst, wobei Nuten im Blechpaket ausgebildet werden, die zum Aufnehmen von Leitungsstäben ausgebildet sind, wobei mehrere Leitungsstäbe vorgefertigt werden, wobei die Leitungsstäbe vermessen werden, wobei die Nuten vermessen werden, wobei ein Berechnungssystem verwendet wird, das eine Zuordnung zwischen einem einzelnen Leitungsstab und einer Nut ermittelt.

Desweiteren wird die Aufgabe gelöst durch ein Automatisierungssystem, zur Herstellung einer Statorwicklung einer elektrodynamischen Maschine, wobei die Statorwicklung Leitungsstäbe umfasst, wobei die elektrodynamische Maschine ein Blechpaket umfasst, wobei Nuten im Blechpaket angeordnet sind, die zum Aufnehmen von Leitungsstäben ausgebildet sind, wobei ein Vermessungssystem die Geometrie der Leitungsstäbe und der Nuten ermittelt; mit einem Berechnungssystem, das die Zuordnung zwischen einem einzelnen Leitungsstab und einer Nut ermittelt.

Vorteilhafte Weiterbildungen sind in den Unteransprüchen angegeben.

Die Erfindung geht von dem Aspekt aus, dass mittels eines genauen Vermessungssystems die Geometrie der Leitungsstäbe und Nuten zunächst ermittelt wird und mittels eines Berechnungssystems die Leitungsstäbe der Nut zugeordnet werden, die am besten zu dem Leitungsstab passt. Die Erfindung verfolgt somit den Aspekt, mittels einer eventuell fertigungsbegleitenden 3D-Vermessung, was zum Beispiel bereits in der Stabbiegevorrichtung erfolgen kann, die Geometrie des Leitungsstabes und der Nut auszurechnen und einen Abgleich mit einer Idealgeometrie zu berechnen. Das Berechnungssystem errechnet eine ideale Nut-Lage der realen Leitungsstäbe, bei der die geringste Toleranz-Aufsummierung auftritt, das bedeutet, die geringste Abweichung von der Ideallage aufweist.

In einer ersten vorteilhaften Weiterbildung ermittelt das Berechnungssystem eine ideale Nutgeometrie der vermessenen Leitungsstäbe und in einem nächsten Schritt wird dem vermessenen Leitungsstab eine Nut im Blechpaket zugeordnet, die die geringste Abweichung von der idealen Nutgeometrie aufweist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterungen dienlich, in schematisierter und/oder leicht verzerrter Form ausgeführt.

Im Hinblick auf Ergänzungen der in der Zeichnung unmittelbar erkennbaren Lehren, wird auf den einschlägigen Stand der Technik verwiesen.

Es zeigen:
- Figur 1: schematische Darstellung von Leitungsstäben,
- Figur 2: eine schematische Darstellung eines Blechpakets.

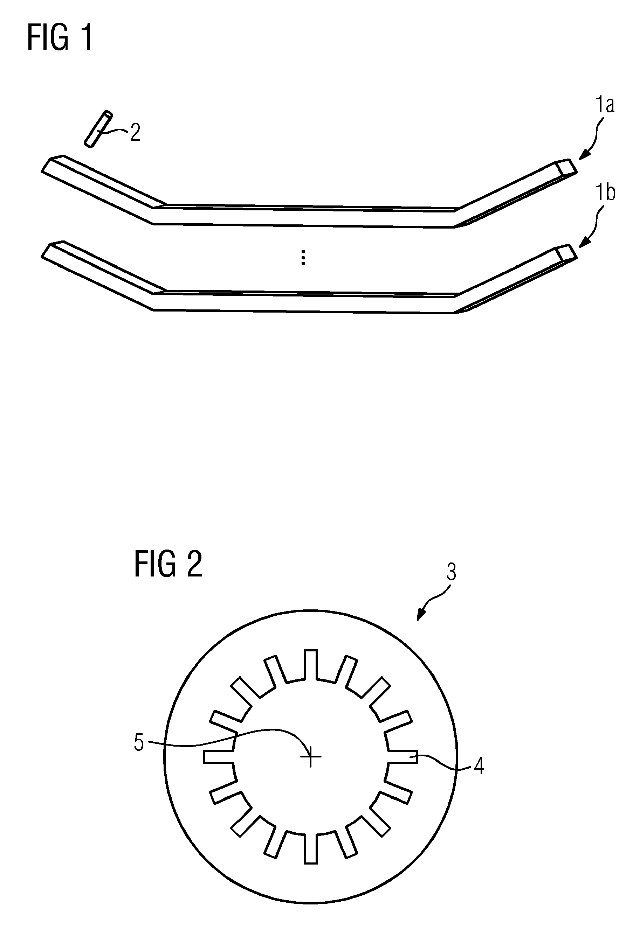

Die Figur 1 zeigt einen ersten Leitungsstab 1a und einen zweiten Leitungsstab 1b. In der Figur 1 sind lediglich zwei Leitungsstäbe beispielhaft aufgeführt. In einem ersten Verfahrensschritt werden mehrere Leitungsstäbe 1a, 1b gefertigt, wovon in Figur 1 lediglich zwei dargestellt sind. Die Leitungsstäbe 1a, 1b werden mittels einer Vermessungsvorrichtung 2 vermessen, so dass 3D-Daten der einzelnen Leitungsstäbe 1a, 1b vorliegen. Die Leitungsstäbe 1a, 1b werden zur Herstellung einer Statorwicklung für eine elektrodynamische Maschine, wie beispielsweise eines elektrischen Generators gefertigt.

Die Figur 2 zeigt eine schematische Darstellung eines Blechpakets 3. Das Blechpaket 3 umfasst mehrere um eine Rotationsachse 5 angeordnete Nuten 4. Die Nuten sind im Blechpaket 3 derart ausgebildet, dass sie zum Aufnehmen der Leitungsstäbe 1a, 1b geeignet sind.

In einem ersten Verfahrensschritt werden mehrere Leitungsstäbe 1a, 1b vorgefertigt und vermessen. In einem weiteren Verfahrensschritt werden ebenso alle Nuten 4 (der Übersichtlichkeit wegen ist in der Figur 2 lediglich eine Nut mit dem Bezugszeichen 4 versehen) vermessen.

Ein nicht näher dargestelltes Berechnungssystem wird dann anschließend verwendet, um eine Zuordnung zwischen einem einzelnen Leitungsstab 1a, 1b und einer Nut 4 zu ermitteln. Dies erfolgt indem das Berechnungssystem eine ideale Nutgeometrie der vermessenen Leitungsstäbe ermittelt und dem vermessenen Leitungsstab 1a, 1b die Nut 4 im Blechpaket 3 zugeordnet wird, die die geringste Abweichung von der idealen Nutgeometrie aufweist. In der Regel entstehen dadurch die geringsten Spalte zwischen dem Blechpaket 3 und dem Leitungsstab 1a, 1b. Zweckdienlicherweise wird hier die Vermessung der Leitungsstäbe und der Nuten dreidimensional durchgeführt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Herstellung einer Statorwicklung für eine elektrodynamische Maschine,
wobei die Statorwicklung aus Leitungsstäben (1a, 1b) ausgebildet wird,
wobei die elektrodynamische Maschine ein Blechpaket (3) umfasst,
wobei Nuten (4) im Blechpaket (3) ausgebildet werden, die zum Aufnehmen von Leitungsstäben (1a, 1b) ausgebildet sind, wobei mehrere Leitungsstäbe (1a, 1b) vorgefertigt werden, wobei die Leitungsstäbe (1a, 1b) vermessen werden,
wobei die Nuten (4) vermessen werden,
wobei ein Berechnungssystem verwendet wird, das eine Zuordnung zwischen einem einzelnen Leitungsstab (1a, 1b) und einer Nut (4) ermittelt.

2. Verfahren nach Anspruch 1,
wobei das Berechnungssystem eine ideale Nutgeometerie der vermessenen Leitungsstäbe (1a, 1b) ermittelt und dem vermessenen Leitungsstab (1a, 1b) der Nut (4) im Blechpaket (3) zugeordnet wird, die die geringste Abweichung von der idealen Nutgeometrie aufweist.

3. Verfahren nach Anspruch 1 oder 2,
wobei eine dreidimensionale Vermessung der Leitungsstäbe (1a, 1b) und der Nuten (4) durchgeführt wird.

4. Automatisierungssystem,
zur Herstellung einer Statorwicklung einer elektrodynamischen Maschine,
wobei die Statorwicklung Leitungsstäbe (1a, 1b) umfasst, wobei die elektrodynamische Maschine ein Blechpaket (3) umfasst,
wobei Nuten (4) im Blechpaket (3) angeordnet sind,
die zum Aufnehmen von Leitungsstäben (1a, 1b) ausgebildet sind,
wobei ein Vermessungssystem die Geometrie der Leitungsstäbe (1a, 1b) und der Nuten (4) ermittelt;
mit einem Berechnungssystem, das die Zuordnung zwischen einem einzelnen Leitungsstab (1a, ab) und einer Nut (4) ermittelt.
